# FASCICULE DE BREVET EUROPEEN

(11) **EP 2 257 465 B1**
(45) Date de publication et mention de la délivrance du brevet: **24.04.2013**
(21) Numéro de dépôt: 09710987.0
(22) Date de dépôt: 13.02.2009
(51) Int. Cl.: B64C 1/00, F16F 7/12, B64C 1/06

(54) **ELEMENT STRUCTURAL ABSORBEUR D'ENERGIE EN MATERIAU COMPOSITE ET FUSELAGE D'AERONEF MUNI D'UN TEL ABSORBEUR**
AUS VERBUNDMATERIAL HERGESTELLTES ENERGIE AUFNEHMENDES STRUKTURELEMENT UND FLUGZEUGRUMPF MIT DEM ABSORBER
ENERGY-ABSORBING STRUCTURAL ELEMENT MADE OF A COMPOSITE MATERIAL AND AIRCRAFT FUSELAGE HAVING SAID ABSORBER

(30) Priorité: 15.02.2008 FR 0850966
(43) Date de publication de la demande: 08.12.2010
(73) Titulaire: AIRBUS OPERATIONS (S.A.S), 31060 Toulouse (FR)
(72) Inventeur: MILLIERE, Jérôme, 31490 Leguevin (FR); ANDISSAC, David, 31500 Toulouse (FR); RAULOT, Cécile, 31700 Blagnac (FR); VINCENT, Olivier, 31700 Cornebarrieu (FR)
(74) Mandataire: Fourcade, Emmanuelle
(86) Numéro de dépôt international: PCT/FR2009/050235
(87) Numéro de publication internationale: WO 2009/101372

(56) Documents cités:
- WO-A-2008/065083
- DE-A1- 4 313 592
- DE-A1- 19 623 449
- DE-A1- 19 812 579
- DE-C1- 4 425 829
- FR-A- 2 657 130
- US-A- 3 608 677
- US-A- 3 779 591
- US-A1- 2003 034 659
- US-A1- 2004 231 937
- US-B1- 6 601 886

## Description

La présente invention est relative à une structure primaire d'aéronefs. Plus particulièrement, l'invention concerne une structure primaire d'aéronefs conçue pour absorber l'énergie dissipée lors d'un effort de compression brutal, en particulier lors d'un choc consécutif à un accident tel qu'un atterrissage ou un amerrissage brutal sollicitant le fuselage selon son axe vertical (crash à composante verticale).

Le fuselage d'un aéronef comprend principalement une structure constituée d'un revêtement renforcé intérieurement par des cadres de renfort et des lisses. Les cadres de renforts sont positionnés suivant des sections du fuselage sensiblement perpendiculaires à un axe longitudinal du fuselage et les lisses s'étendent essentiellement suivant l'axe longitudinal. Les cadres de renfort supportent des traverses, généralement droites et horizontales, dans un repère aéronef, sur lesquelles sont fixés des planchers.

Lors d'un crash à composante principale verticale, la partie inférieure du fuselage est, en général, la première zone de l'aéronef soumise à des impacts et participe donc à l'absorption de l'énergie des impacts de manière essentielle.

La certification des aéronefs, en particulier des avions de transport civil, impose des critères de comportement du fuselage dans différentes situations de crash, afin d'améliorer les chances de survie des passagers en cas d'accident.

Pour les aéronefs dont la structure du fuselage est réalisée à partir d'éléments structuraux (cadres de renfort, revêtement, lisses, traverses) en matériau métallique, une quantité importante de l'énergie de l'impact est absorbée par la déformation plastique des éléments de la structure métallique. Il n'est en général pas nécessaire de prévoir des systèmes d'absorption d'énergie dédiés, la structure assurant de manière passive la fonction d'absorption d'énergie du fait des caractéristiques intrinsèques des alliages métalliques mis en oeuvre et d'une conception adaptée.

La partie inférieure du fuselage est donc dessinée afin de répondre principalement aux sollicitations rencontrées lors de l'exploitation commerciale normale de l'aéronef.

L'amélioration constante de la performance des aéronefs stimule aujourd'hui la réalisation de plus en plus fréquente d'éléments structuraux en matériaux composites pour la structure du fuselage de l'aéronef, en raison de l'allégement de masse que ces matériaux composites permettent d'obtenir pour de telles structures.

Cependant, au contraire des éléments structuraux en matériaux métalliques qui disposent d'un important domaine de déformation plastique avant rupture, les matériaux composites n'ont pratiquement pas de domaine plastique avant rupture.

Une structure de fuselage (cadre de fuselage, peaux, lisses...), réalisée en matériau composite, se comporte donc très différemment d'une structure de fuselage en matériau métallique, vis à vis de l'absorption d'énergie et en fin de sollicitations, avant ou après une rupture, la structure en matériau composite va restituer une grande partie de l'énergie absorbée lors de la déformation élastique.

Une solution connue consiste à insérer entre le plancher et les cadres inférieurs des éléments structuraux dont la constitution permet d'en déclencher la ruine sous une intensité de sollicitation prédéfinie supérieure à l'intensité de sollicitations nominales en service. Dans le cas où ces éléments structuraux sont constitués de matériaux composites à renfort fibreux, la ruine intervient par décohésion ou délaminage du matériau. Ces éléments potentiellement absorbeur d'énergie sont liés aux traverses de plancher et aux cadres par des fixations de type rivet.

On connaît du document DE 196 23 449 un élement structural comportant une poutre de compression en matériau composite et un gousset fixé à une des extrémités de la poutre.

Vis à vis des sollicitations nominales, les éléments structuraux agissent comme des raidisseurs. En cas de sur-sollicitation, par exemple lors d'un accident, lesdits éléments structuraux se déclenchent et s'effondrent. Ce phénomène étant irréversible, celui-ci dissipe de l'énergie. Il s'effectue, du reste, à effort sensiblement constant excepté lors de l'initiation et en fin de course lorsque le plancher fini par heurter la partie inférieure du fuselage.

Cependant, ce phénomène progressif de destruction du matériau de la poutre, qui permet en théorie l'effondrement progressif de l'absorbeur d'énergie sur lui-même est difficilement maîtrisable et prédictible, même dans des conditions de laboratoire.

D'autre part, lors du cisaillement ou de l'arrachement des fixations en cas d'effort sur la poutre suite au scénario de crash, ladite poutre, au lieu d'assurer sa fonction d'absorbeur d'énergie, si la destruction du matériau est mal initiée, se retrouve libre et peut se comporter comme un bélier et endommager prématurément d'autres structures, comme par exemple le plancher. Une telle solution n'est donc pas satisfaisante car non adaptée à une exigence de tenue à un crash à composante principale verticale.

La mise en oeuvre d'éléments au niveau de structures primaires d'aéronefs qui permet de concilier l'utilisation d'éléments structuraux (cadres de renforts, revêtement, lisses,...) en matériau composite pour les structures primaires et les exigences de tenue à un crash, en particulier vertical, en absorbant l'énergie est donc indispensable pour améliorer les chances de survie des passagers dans les aéronefs.

Une structure primaire d'un fuselage d'aéronef comporte :
- un revêtement, comportant des lisses pour le stabiliser.
- au moins un cadre de renfort,
- au moins une traverse fixée sur ledit au moins un cadre de renfort,
- au moins un élément structural de forme allongé, dit élément structural absorbeur d'énergie, comportant une poutre de compression, de préférence en matériau composite, d'axe longitudinal Z, orientée sensiblement suivant une direction de forces de compression devant être absorbées lors d'un choc, ladite poutre de compression étant fixée à une première extrémité à la traverse, et à une seconde extrémité au cadre de renfort.

Suivant l'invention, la poutre de compression du au moins un élément structural absorbeur d'énergie est fixée à au moins une de ses extrémités par l'intermédiaire d'un gousset, ledit gousset comportant :
- des moyens de guidage de la poutre sensiblement suivant son axe longitudinal Z,
- un élément coupant de découpage de la poutre de compression en au moins deux lamelles, suivant la direction de l'axe longitudinal Z,
- une gorge de dégagement pour chaque lamelle.

La poutre de compression comporte une âme et deux semelles présentant, sur une certaine longueur de son extrémité située du coté du gousset, une section droite, dans un plan normal à l'axe longitudinal Z, en forme de U, et est fixée au gousset par des fixations de reprise d'efforts limites, aptes à reprendre les efforts auxquelles est soumis l'élément structural absorbeur d'énergie en dehors du cas de choc.

Dans un mode de réalisation du gousset, ledit gousset comporte un élément coupant comportant une lame orientée vers l'âme de la poutre de compression et deux gorges de dégagement situées de part et d'autre de la lame.

Dans un mode amélioré de réalisation du gousset, ledit gousset comporte un élément coupant comportant deux lames orientées vers l'âme de la poutre, et trois gorges de dégagement, deux gorges de dégagement voisines étant séparées entre elles par une lame.

De préférence, la poutre de compression est réalisée par un empilement de plis, chaque pli étant réalisé par des fibres continues maintenues par une résine. Ladite poutre comporte des plis orientés sensiblement suivant l'axe longitudinal Z caractérisant principalement la résistance longitudinale de la poutre de compression et des plis inclinés par rapport à la direction de l'axe longitudinal Z déterminant principalement la résistance au découpage de la poutre de compression par l'élément coupant lors d'un choc.

De préférence, pour favoriser l'amorçage de la découpe de l'âme de la poutre de compression, ladite poutre de compression comporte, au niveau de sa première extrémité, une encoche d'amorçage en vis à vis de chaque lame, lorsque la poutre de compression est fixée au gousset.

Dans un mode de réalisation, le gousset est réalisé dans un matériau métallique, au moins en partie.

L'invention est relative à un élément structural absorbeur d'énergie, destiné à reprendre des efforts de compression entre deux pièces structurales d'un fuselage d'aéronef, comportant une poutre de compression en matériau composite, d'axe longitudinal Z, orientée sensiblement suivant une direction de forces de compression devant être absorbées lors d'un choc, caractérisé en ce que ledit au moins un élément structural absorbeur d'énergie comporte au moins un gousset, fixé à au moins une des extrémités de la poutre de compression et destiné à transmettre les efforts de compression à la pièce structurale à laquelle ledit gousset est fixé, ledit gousset comportant :
- des moyens de guidage de la poutre sensiblement suivant son axe longitudinal Z,
- un élément coupant de découpage de la poutre de compression en au moins deux lamelles, suivant la direction de l'axe longitudinal Z,
- une gorge de dégagement pour chaque lamelle.

Dans un mode de réalisation, un gousset est fixé à chaque extrémité de la poutre de compression.

La description détaillée de l'invention est faite en référence aux figures qui représentent :
Figure 1, une vue en perspective, représentant schématiquement une partie inférieure d'un tronçon d'une structure primaire d'un fuselage d'aéronef comportant quatre éléments structuraux absorbeurs d'énergie sous un plancher réalisés conformément à l'invention,
Figure 2, une vue de face de deux éléments structuraux absorbeurs d'énergie d'un fuselage conforme à l'invention,
Figure 3, une vue en perspective d'un élément structural absorbeur d'énergie suivant un mode de réalisation, et comportant une poutre de compression,
Figure 4, une vue en perspective d'un élément structurai absorbeur d'énergie, suivant un mode de réalisation, comportant une poutre de compression et une pièce de maintien de ladite poutre,
Figure 5, une vue de face d'un élément structural absorbeur d'énergie, suivant un mode amélioré de réalisation,
Figure 6, une illustration de l'évacuation des lamelles de la poutre de compression suivant un mode de réalisation,
Figure 7a, 7b, des illustrations de l'évacuation des lamelles de la poutre de compression suivant le mode amélioré de réalisation.

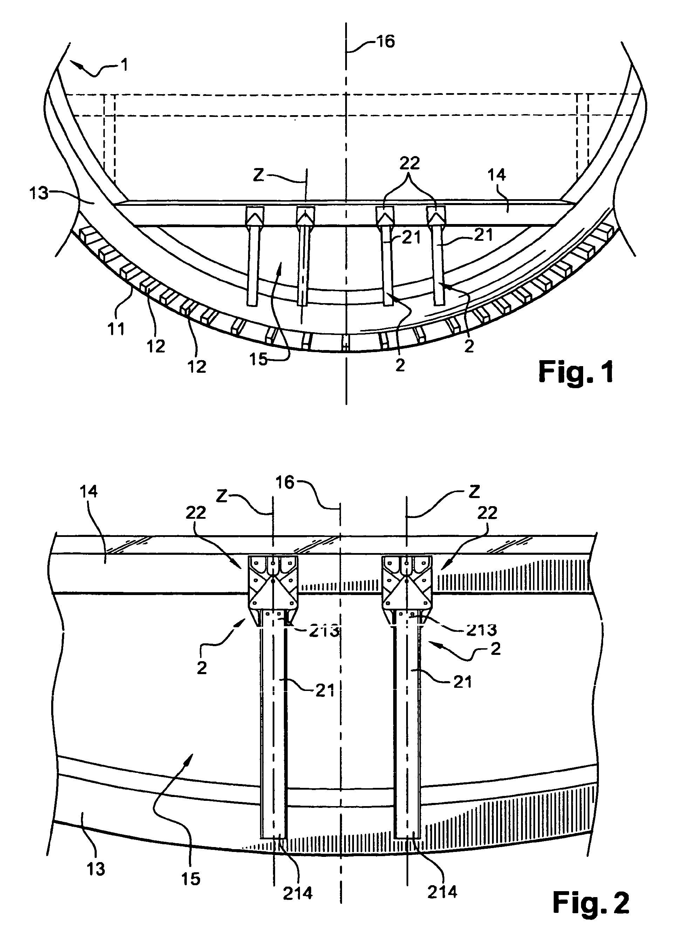

Une structure primaire d'un fuselage d'aéronef comporte, comme illustré sur la figure 1, une ossature 1, sensiblement cylindrique, sur laquelle est fixée un revêtement 11 renforcé par des lisses 12 s'étendant sensiblement suivant un axe longitudinal de la structure primaire du fuselage de l'aéronef.

L'ossature 1 de la structure primaire du fuselage d'aéronef est formée principalement de cadres de renfort 13. Lesdits cadres de renfort sont positionnés suivant des sections du fuselage sensiblement perpendiculaires à l'axe longitudinal du fuselage et sont régulièrement répartis sur toute la longueur du fuselage d'aéronef. Chacun d'entre eux présente une forme qui correspond sensiblement à la section locale du fuselage, le plus souvent circulaire, au moins localement, comme dans l'exemple de la figure 1.

Sur chaque cadre de renfort 13 est fixé une traverse 14. Les traverses 14 sont avantageusement droites et horizontales, dans un repère aéronef, de sorte à pouvoir supporter un plancher (non représenté), tel que le plancher d'une soute de chargement ou d'une cabine de passagers.

En outre, l'ossature 1 comporte, dans une partie inférieure 15 de la structure primaire du fuselage d'aéronef située entre les traverses 14 et les cadres de renfort 13, au moins un élément structural 2 absorbeur d'énergie. Dans l'exemple de réalisation illustré sur la figure 2, deux éléments structuraux 2 absorbeurs d'énergie sont représentés. Chaque élément structural 2 absorbeur d'énergie comporte :
- une poutre de compression 21,
- au moins un gousset 22.

La poutre de compression 21 est reliée, d'une part en une première extrémité 213 à une traverse 14 et d'autre part en une seconde extrémité 214, opposée à ladite première extrémité, à un cadre de renfort 13.

La poutre de compression est fixée, à au moins une de ses deux extrémités 213, 214, au moyen d'un gousset 22.

Pour chaque ensemble traverse-cadre de renfort, les poutres de compression 21 ont un axe longitudinal Z orienté sensiblement suivant la direction des forces de compression devant être absorbées lors d'un choc, par exemple sensiblement vertical sous un plancher, et le ou les éléments structuraux absorbeurs d'énergie sont agencés sensiblement symétriquement par rapport à un plan longitudinal vertical de symétrie 16 du fuselage d'aéronef.

Dans l'exemple de réalisation illustré par la figure 1, pour un ensemble traverse-cadre de renfort, quatre éléments structuraux 2 absorbeurs d'énergie sont positionnés symétriquement deux à deux par rapport au plan longitudinal vertical de symétrie 16 de la structure primaire du fuselage d'aéronef, sans que ce choix soit limitatif de l'invention.

Le rôle de l'élément structural 2 absorbeur d'énergie est double. D'une part, l'élément structural 2 absorbeur d'énergie assure une fonction de transfert d'efforts entre la traverse 14 et le cadre de renfort 13, lorsque la structure du fuselage est soumise aux efforts normaux correspondant à des sollicitations rencontrées pendant l'exploitation normale de l'aéronef, majorées de facteurs de sécurité. D'autre part, l'élément structural 2 absorbeur d'énergie assure, grâce aux éléments qui le compose, la destruction de la poutre 21, de façon progressive, lorsque ladite poutre est soumise à un effort de compression appliqué dans le sens de sa longueur, c'est à dire dans l'exemple illustré sensiblement verticalement, correspondant aux efforts rencontrés lors de cas de crash. La destruction progressive de la poutre de compression 21 a pour effet d'absorber une partie de l'énergie générée lors de l'impact.

Le gousset 22 assure en outre une fonction de découpe de la poutre de compression 21.

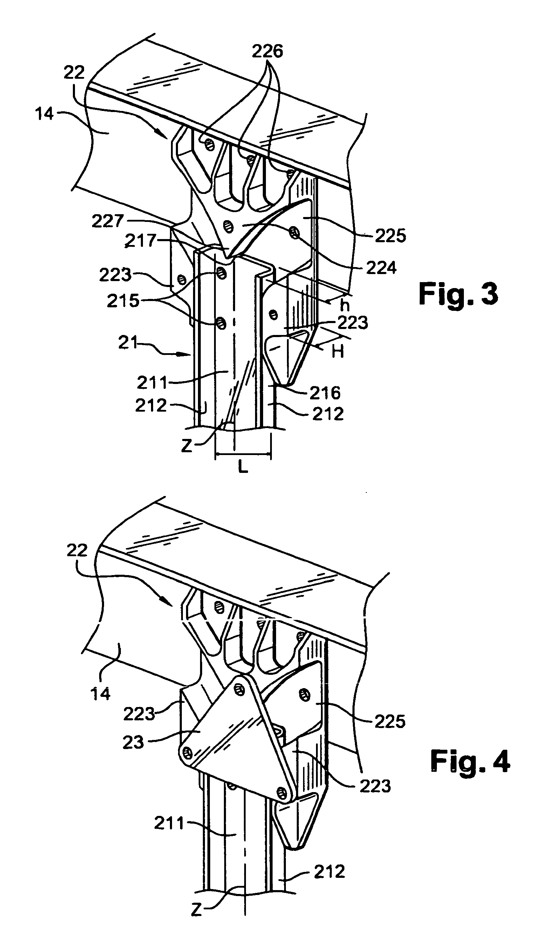

Le gousset 22 comporte, comme illustré sur ia figure 3 :
- des moyens de guidage 223, apte à guider en translation la poutre de compression 21 sensiblement suivant la direction de son axe longitudinal Z, lorsqu'un effort de compression suffisant est appliqué à la poutre,
- un élément coupant 224, agencé pour découper, suivant la direction de l'axe longitudinal Z, la poutre 21 en lamelles lorsque ladite poutre est guidée en translation dans les moyens de guidage 223,
- au moins une gorge de dégagement 225, agencée pour évacuer les lamelles découpées de la poutre.

Dans un mode de réalisation d'un élément structural 2 absorbeur d'énergie, la poutre 21 présente, au moins sur une certaine longueur de son extrémité située du coté du gousset, une section droite dans un plan normal à l'axe longitudinal Z en forme de U et comporte une âme 211 de largeur L et deux semelles 212 de hauteur h. Dans l'exemple illustré sur les figures 3 et 4, la poutre présente sur toute la longueur, une section droite dans un plan normal à l'axe longitudinal Z en forme de U.

Le gousset 22 a sensiblement la forme d'une plaque. Ledit gousset comporte :
- les moyens de guidage 223,
- l'élément coupant 224,
- deux gorges de dégagement 225.

La première extrémité 213 de la poutre 21 est fixée, par exemple au niveau de son âme 211, au gousset 22 par des fixations, dites fixations travaillantes 215, de reprise d'efforts limites auxquelles est soumis l'élément structural 2 absorbeur d'énergie en dehors d'un cas de choc.

Dans un exemple de réalisation, le gousset 22 est fixé sur la traverse 14 ou le cadre de renfort 13 au moyen de fixations 226.

La seconde extrémité 214 de la poutre 21 est fixée sur le cadre de renfort 13. La seconde extrémité peut être assemblée par des moyens conventionnels ou de la même façon que sur la traverse 14, au moyen du gousset 22.

Mais de préférence, le gousset 22 est mis en oeuvre sur la traverse 14 afin d'éviter une éventuelle destruction dudit gousset, et principalement de l'élément coupant 224, sur le cadre de renfort 13 lors d'un impact dans la partie inférieure du fuselage.

Dans un autre exemple de réalisation, le gousset 22 est mis en oeuvre de part et d'autre des extrémités de la poutre sur la traverse 14 et sur le cadre de renfort 13.

Dans un mode préféré de réalisation, la poutre 21 est réalisée dans un matériau composite et est constituée par un empilement de plis. Chaque pli est réalisé par des fibres continues maintenues par une résine.

Dans un exemple de réalisation, les plis sont unidirectionnels, tissés ou tressés.

L'empilement des plis comporte :
- d'une part, des plis pour assurer essentiellement le transfert des efforts en fonctionnement nominal, sans opposer une résistance importante lors de la déchirure de l'âme 211, tels que par exemple des plis à 0°, c'est à dire orientés dans l'axe longitudinal de la poutre,
- d'autre part, des plis, inclinés par rapport à l'axe longitudinal, qui, d'une part assurent une partie du transfert des efforts en fonctionnement nominal, et d'autre part, déterminent la résistance au découpage de la poutre de compression 21 par l'élément coupant 224 lors d'un choc, tels que par exemple des plis à ± 45° et 90°, c'est à dire orientés à ± 45° et 90° par rappo rt à l'axe longitudinal de la poutre.

Dans un exemple de réalisation, la poutre 21 est réalisée par un empilement de quatorze plis, du type 6/3/3/2 : 6 plis à 0°, 3 plis à 45°, 3 plis à - 45° et 2 plis à 90°.

Dans un autre mode de réalisation, la poutre 21 est réalisée dans un matériau métallique.

Dans une forme de réalisation, la poutre 21 est de section constante.

Dans une autre forme de réalisation, la poutre 21 est de section et d'épaisseur constante.

Dans une autre forme de réalisation, la poutre 21 présente, à l'extrémité située du coté du gousset 22 et sur une certaine longueur, une section de dimension sensiblement inférieure à celle d'une section sur la longueur restante de la poutre 21.

De préférence, la poutre 21 comporte, en vis à vis de l'élément coupant 224, une encoche 217 pour favoriser l'amorçage de la découpe de l'âme 211 de la poutre 21. De préférence, l'encoche 217 est positionnée sensiblement à mi-largeur de l'âme.

Les moyens de guidage 223 sont positionnés contre des faces extérieures 216 de chaque semelle 212 de la poutre 21 de sorte à guider ladite poutre suivant son axe longitudinal.

De préférence, les moyens de guidage ont une profondeur H sensiblement inférieure à la hauteur h des semelles 212 de la poutre 21, afin de permettre la mise en place de la pièce de maintien 23, en tenant compte des tolérances de réalisation.

L'élément coupant 224 comporte une lame 227 pourvue d'une arête tranchante orientée vers la poutre de compression 21, positionnée face à l'encoche 217 de la poutre de compression 21, lorsque ladite poutre de compression comporte une telle encoche, et de préférence positionnée sensiblement à mi largeur de l'âme. La lame présente de préférence une forme sensiblement en V au niveau de l'arête tranchante. La lame 227 a une longueur au moins égale à une épaisseur maximale de l'âme 211 de la poutre de compression 21. Par exemple, la longueur de la lame 227 est sensiblement égale à la hauteur h des semelles 212 de la poutre de compression 21.

Les deux gorges de dégagement 225 sont situées de part et d'autre de la lame 227 et permettent d'évacuer les lamelles comportant chacune une semelle 212 de la poutre de compression 21 et une partie de l'âme restant solidarisée à chaque semelle, de part et d'autre du gousset 22, afin d'éviter un contact dur entre autre avec la traverse 14 qui pourrait perturber la dynamique de destruction de la poutre de compression.

Avantageusement, une pièce de maintien 23 est fixée sur le gousset 22 pour maintenir la poutre de compression 21 dans les moyens de guidage 223 dudit gousset et permettre de garantir que l'âme 211 de la poutre de compression 21 est maintenue en vis à vis de la lame 227 lors de la compression de la poutre. Par exemple, lorsque les épaisseurs de l'élément coupant 224 et des moyens de guidage 223 sont sensiblement égales à la hauteur h des semelles 212, la pièce de maintien 23 est fixée au gousset 22 au niveau desdits moyens de guidage et dudit élément coupant.

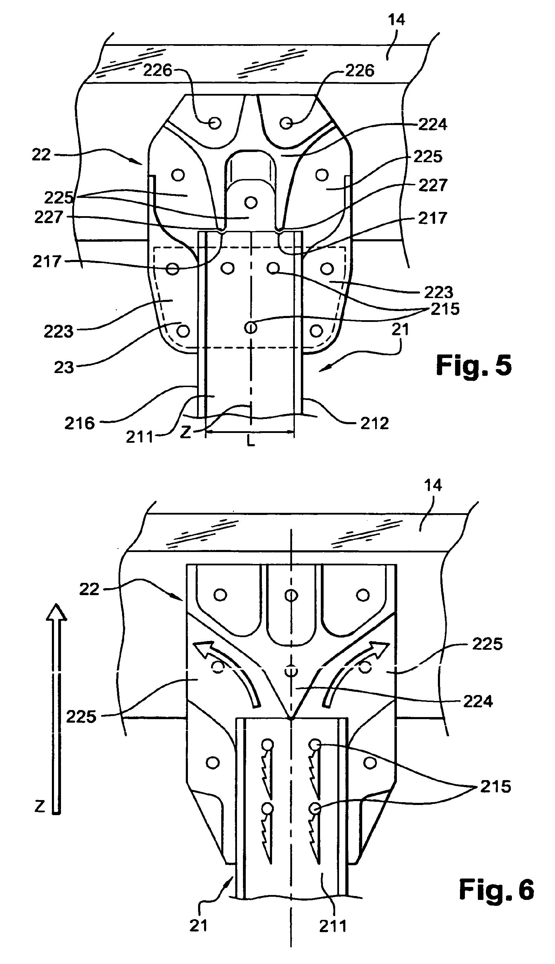

Dans un mode amélioré du gousset 22, comme illustré sur la figure 5, ledit gousset comporte :
- les moyens de guidage 223,
- l'élément coupant 224, comportant deux lames 227,
- trois gorges de dégagement 225.

Les moyens de guidage 223 sont positionnés contre les faces extérieures 216 de chaque semelle 212 de la poutre de compression 21 de sorte à guider ladite poutre de compression suivant l'axe longitudinal Z.

L'élément coupant 224 comporte deux lames 227 pourvues chacune d'une arête tranchante orientée vers la poutre de compression, distantes l'une de l'autre d'au plus la largeur L de l'âme 211 de la poutre de compression 21, et par exemple positionnées sensiblement à proximité de chaque semelle 212 de la poutre 21.

De préférence, la poutre de compression 21 comporte, en vis à vis de chaque lame 227, une encoche 217 pour favoriser l'amorçage de la découpe de l'âme 211 de la poutre de compression 21.

Deux gorges de dégagement 225 permettent d'évacuer les lamelles comportant chacune une semelle 212 de la poutre de compression 21 et une partie de l'âme restant solidarisée à chaque semelle, de part et d'autre du gousset 22, afin d'éviter un contact dur entre autre avec la traverse 14 qui pourrait perturber la dynamique de destruction de la poutre de compression 21.

La troisième gorge de dégagement 225, située entre les deux lames 227 de l'élément coupant 224, permet d'évacuer la lamelle comportant la partie restante de l'âme 21 de la poutre de compression par l'avant.

Avantageusement, une pièce de maintien 23 est fixée sur le gousset 22 pour maintenir la poutre de compression 21 dans les moyens de guidage 223 dudit gousset et permettre de garantir que l'âme 211 de la poutre de compression 21 est maintenue en vis à vis des lames 227 lors de la compression de ladite poutre. Par exemple, la pièce de maintien 23 est fixée au gousset 22 au niveau desdits moyens de guidage de sorte à permettre le dégagement de la lamelle comportant la partie restante de l'âme 211 de la poutre de compression 21 par la troisième gorge de dégagement 225.

De préférence, les éléments coupants 224 sont sensiblement identiques pour tous les éléments structuraux 2 absorbeur d'énergie.

Dans un mode de réalisation, le gousset 22 est réalisé dans un matériau métallique, avantageusement en aluminium, en alliage d'aluminium ou en alliage d'acier afin de ne pas générer une pénalité de masse significative sur la structure primaire du fuselage.

Dans un mode préféré de réalisation, le gousset 22 est réalisé dans un matériau composite à renfort fibreux sous forme de fibres longues coupées, d'une longueur de l'ordre de 50mm, par exemple en fibres de carbone.

Dans une forme de réalisation, les moyens de guidage 223, les gorges de dégagement 225, l'élément coupant 224 et la au moins une lame sont réalisés par usinage ou par moulage.

Dans une forme améliorée de réalisation, le gousset est réalisé dans un matériau composite à renfort fibreux, à base de fibres courtes, par exemple en carbone et sont réalisés, par exemple, à partir d'un procédé de matriçage. L'arête tranchante de la au moins une lame 227 de l'élément coupant 224 est un élément ajouté, de préférence co-moulée avec le gousset, et de préférence réalisé en matériau métallique, avantageusement en alliage de titane, afin d'assurer une longévité de la coupe.

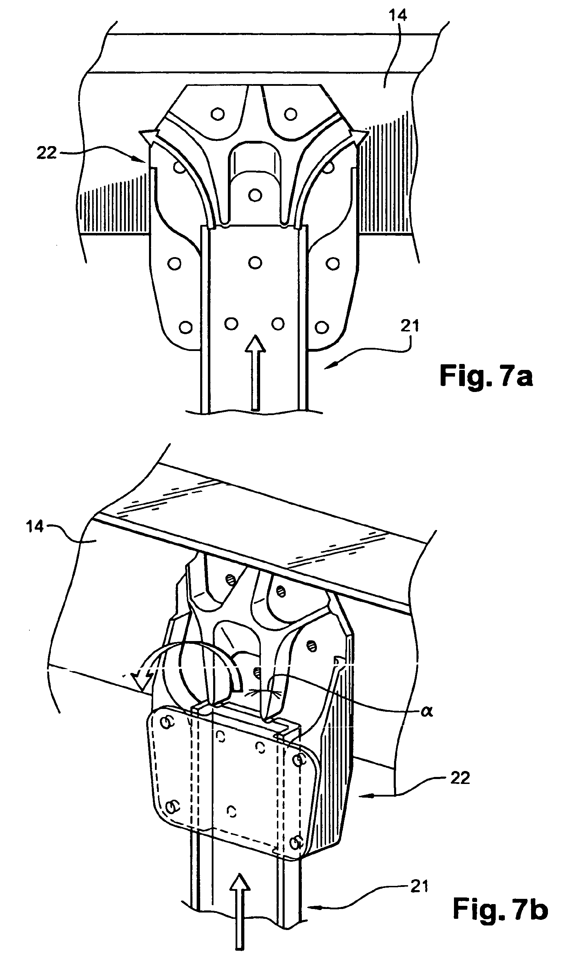

De préférence, la lame présente, au niveau de l'arête tranchante, un angle α (figure 7b), dit angle de lame, compris entre 30° et 45°, par exemple 37°.

Une valeur de déclenchement de l'élément structural absorbeur d'énergie est déterminée à partir du calcul d'une valeur de rupture des fixations travaillantes.

En fonctionnement nominal, c'est à dire lorsque les charges sont inférieures ou égales à des charges normales susceptibles d'être rencontrées en exploitation commerciale, majorées des facteurs de sécurité associés, chaque élément structural 2 absorbeur d'énergie assure une fonction de transfert d'effort entre une traverse 14 et un cadre de renfort 13.

En cas de crash, une augmentation de l'effort sur la poutre de compression 21 suivant l'axe vertical est générée. Deux cas de déclenchement de l'élément structural 2 absorbeur d'énergie sont alors possibles, suite à cette augmentation :
- un premier cas correspondant à une rupture des fixations en cisaillement, qui permet à l'élément structural 2 absorbeur d'énergie de se déclencher.
   La poutre de compression 21 se déplace alors suivant son axe longitudinal Z, qui est sensiblement le déplacement imposé par les efforts de compression, l'âme 211 de la poutre de compression 21 étant déchirée par l'élément coupant 224.
- un deuxième cas correspondant à une rupture de la poutre de compression 21 en matage dans la zone des fixations, qui permet à l'élément structural 2 absorbeur d'énergie de se déclencher.
   La poutre de compression 21 se déplace alors suivant son axe longitudinal Z, qui est sensiblement le déplacement imposé par les efforts de compression, l'âme 211 de la poutre de compression 21 étant déchirée en matage par les fixations travaillantes.

Dans ce deuxième cas de déclenchement, l'élément coupant 224 découpe l'âme 211 de la poutre de compression 21 en complément de la déchirure en matage générée par les fixations.

De plus, avantageusement, l'élément coupant 224 a également une fonction, dite « fail safe » dans le cas d'une rupture prématurée des fixations travaillantes en cisaillement qui n'assureraient plus dans ce cas leur fonction de déchirure en matage de la poutre de compression 21.

Dans le premier mode de réalisation, les lamelles comportant chacune une semelle 212 de la poutre de compression 21 et une partie de l'âme restant solidarisée à chaque semelle, sont guidées de part et d'autre de la lame 227 de l'élément coupant 224 par les deux gorges de dégagement 225, comme illustré sur la figure 6.

Dans le mode amélioré de réalisation, les lamelles comportant chacune une semelle 212 de la poutre de compression 21 et la partie restante de l'âme restant solidarisée à chaque semelle sont guidées par deux gorges de dégagement 225, et la lamelle comportant l'âme 21 de la poutre de compression 21 est guidée par la troisième gorge de dégagement 225, située entre les deux lames 227 de l'élément coupant 224, comme illustré sur les figures 7a et 7b.

La destruction progressive de la poutre de compression sur sa longueur permet ainsi de dissiper l'énergie générée lors de l'impact.

## Revendications

1. Elément structural (2) absorbeur d'énergie, destiné à reprendre des efforts de compression entre deux pièces structurales (13, 14) d'un fuselage d'aéronef, comportant une poutre de compression (21), d'axe longitudinal Z, en matériau composite, ledit matériau comportant des plis de fibres continues maintenues par une résine, ledit axe longitudinal Z étant orienté sensiblement suivant une direction de forces de compression devant être absorbées lors d'un choc, ledit au moins un élément structural (2) absorbeur d'énergie comportant au moins un gousset (22), fixé à au moins une des extrémités (213, 214) de la poutre de compression (21) et destiné à transmettre les efforts de compression à la pièce structurale à laquelle ledit gousset est fixé, ledit gousset comportant des moyens de guidage (223) de la poutre (21) sensiblement suivant son axe longitudinal Z,
**caractérisé en ce que** le gousset comporte :
- un élément coupant (224) de découpage de la poutre de compression (21) en au moins deux lamelles, suivant la direction de l'axe longitudinal Z,
- une gorge de dégagement (225) pour chaque lamelle.

2. Elément structural (2) absorbeur d'énergie suivant la revendication 1 dans lequel un gousset (22) est fixé à chaque extrémité (213, 214) de la poutre de compression (21).

3. Structure primaire d'un fuselage d'aéronef comportant :
- un revêtement (11),
- au moins un cadre de renfort (13),
- au moins une traverse (14) fixée sur ledit au moins un cadre de renfort (13),
- au moins un élément structural absorbeur d'énergie (2) de forme allongé conforme à l'une des revendications 1 ou 2,
la poutre de compression étant fixée à une première extrémité (213) à la traverse (14), et à une seconde extrémité (214) au cadre de renfort (13), la poutre de compression (21) étant fixée à au moins une de ses extrémités (213, 214) par l'intermédiaire du gousset (22).

4. Structure primaire d'un fuselage d'aéronef suivant la revendication 3 dans laquelle la poutre de compression (21) comporte une âme (211) et deux semelles (212), présentant, au moins sur une certaine longueur de son extrémité située du coté du gousset (22), une section droite, dans un plan normal à l'axe longitudinal Z, en forme de U, ladite poutre étant fixée au gousset (22) par des fixations de reprise d'efforts limites auxquelles est soumis l'élément structural (2) absorbeur d'énergie en dehors d'un cas de choc.

5. Structure primaire d'un fuselage d'aéronef suivant la revendication 4 dans laquelle le gousset (22) comporte un élément coupant (224) comportant une lame (227) orientée vers l'âme (211) de la poutre de compression (21) et deux gorges de dégagement (225) situées de part et d'autre de la lame (227).

6. Structure primaire d'un fuselage d'aéronef suivant la revendication 4 dans laquelle le gousset (22) comporte un élément coupant (224) comportant deux lames (227) orientées vers l'âme (211) de la poutre (21), et trois gorges de dégagement (225), deux gorges de dégagement voisines étant séparées entre elles par une lame (227).

7. Structure primaire d'un fuselage d'aéronef suivant l'une des revendications 3 à 6 dans laquelle la poutre de compression (21) comporte des plis orientés sensiblement suivant l'axe longitudinal Z caractérisant principalement la résistance longitudinale de la poutre de compression et des plis inclinés par rapport à la direction de l'axe longitudinal Z déterminant principalement la résistance au découpage de la poutre de compression (21) par l'élément coupant (224) lors d'un choc.

8. Structure primaire d'un fuselage d'aéronef suivant l'une des revendications 3 à 7 dans laquelle la poutre de compression (21) comporte, au niveau de la première extrémité (213), une encoche d'amorçage (217) en vis à vis de chaque lame (227) lorsque la poutre de compression (21) est fixée au gousset (22).

9. Structure primaire d'un fuselage d'aéronef suivant l'une des revendications 3 à 8 dans laquelle le gousset (22) est en matériau métallique, au moins en partie.

10. Structure primaire d'un fuselage d'aéronef suivant l'une des revendications 3 à 9 dans laquelle l'élément structural absorbeur d'énergie (2) assure une transmission des efforts normaux, entre la traverse (14) et le cadre de renfort (13), correspondants à des sollicitations rencontrées pendant l'exploitation normale de l'aéronef.

11. Structure primaire d'un fuselage d'aéronef suivant la revendication 10 dans laquelle la transmission des efforts normaux est assurée par la fixation de la poutre de compression (21) au gousset (22) au moyen de fixations travaillantes (215).

12. Aéronef comportant une structure primaire d'un fuselage d'aéronef conforme à l'une des revendications 3 à 11.

## Claims

1. An energy-absorbing structural element (2), designed to absorb compressive stresses between two structural parts (13, 14) of an aircraft fuselage, comprising a compression beam (21), having a longitudinal axis Z, made from composite material, said material containing plies of continuous fibres held in place by a resin, said longitudinal axis Z being oriented substantially in the direction of the compression forces to be absorbed during an impact, said at least one energy-absorbing structural element (2) comprising at least one gusset plate (22), attached to at least one end (213, 214) of the compression beam (21) and designed to transmit compressive stresses to the structural part to which said gusset plate is attached, said gusset plate comprising guiding means (223) for guiding the beam (21) substantially along its longitudinal axis Z,
wherein the gusset plate comprises:
- a cutting element (224) for cutting the compression beam (21) into at least two strips along the longitudinal axis Z,
- a clearance groove (225) for each strip.

2. An energy-absorbing structural element (2) according to claim 1, wherein a gusset plate (22) is attached to each end (213, 214) of the compression beam (21).

3. An aircraft fuselage primary structure comprising:
- a skin (11),
- at least one reinforcing fuselage frame (13),
- at least one crossmember (14) attached to said at least one reinforcing fuselage frame (13),
- at least one energy-absorbing structural element (2) extended in shape, according to one of claims 1 or 2,
the compression beam of which being attached at a first end (213) to the crossmember (14), and at a second end (214) to the reinforcing fuselage frame (13), the compression beam (21) being attached at least at one of its ends (213, 214) by means of the gusset plate (22).

4. An aircraft fuselage primary structure according to claim 3, wherein the compression beam (21) comprises a web (211) and two flanges (212) having, at least over a certain length of its end nearest the gusset plate (22), a U-shaped cross-section, in a plane perpendicular to the longitudinal axis Z, said beam being attached to the gusset plate (22) by fastenings absorbing the confining stresses to which the energy-absorbing structural element (2) is subject outside of an impact scenario.

5. An aircraft fuselage primary structure according to claim 4, wherein the gusset plate (22) comprises a cutting element (224) containing a blade (227) directed towards the web (211) of the compression beam (21) and two clearance grooves (225) located on either side of the blade (227).

6. An aircraft fuselage primary structure according to claim 4, wherein the gusset plate (22) comprises a cutting element (224) containing two blades (227) directed towards the web (211) of the beam (21) and three clearance grooves (225), two adjacent clearance grooves being separated from each other by a blade (227).

7. An aircraft fuselage primary structure according to one of claims 3 to 6, wherein the compression beam (21) comprises plies oriented substantially along the longitudinal axis Z mainly characterising the longitudinal strength of the compression beam and of the plies inclined in relation to the direction of the longitudinal axis Z mainly determining the strength of the compression beam (21) when being cut by the cutting element (224) during an impact.

8. An aircraft fuselage primary structure according to one of claims 3 to 7, wherein the compression beam (21) comprises, at its first end (213), a starting notch (217) opposite each blade (227) when the compression beam (21) is attached to the gusset plate (22).

9. An aircraft fuselage primary structure according to one of claims 3 to 8, wherein the gusset plate (22) is at least partially made from a metallic material.

10. An aircraft fuselage primary structure according to one of claims 3 to 9, wherein the energy-absorbing structural element (2) transmits normal loads between the crossmember (14) and the reinforcing fuselage frame (13), these loads corresponding to the stresses encountered during normal use of the aircraft.

11. An aircraft fuselage primary structure according to claim 10, wherein the normal loads are transmitted by attaching the compression beam (21) to the gusset plate (22) by means of working fastenings (215).

12. An aircraft comprising an aircraft fuselage primary structure according to one of claims 3 to 11.

## Patentansprüche

1. Energieabsorbierendes Strukturelement (2) zur Aufnahme von Kompressionsbelastungen zwischen zwei Strukturteilen (13, 14) eines Luftfahrzeugrumpfes, das einen Kompressionsträger (21) umfasst, mit einer Längsachse Z, aus Verbundwerkstoff, wobei dieser Werkstoff durchgängige Faserschichten umfasst, die durch ein Harz in ihrer Form gehalten werden, wobei die Längsachse Z deutlich in Richtung der bei einem Aufprall zu absorbierenden Kompressionskräfte orientiert ist, wobei mindestens ein energieabsorbierendes Strukturelement (2) mindestens ein Eckstück (22) umfasst, das an mindesten einem der Enden (213, 214) des Kompressionsträgers (21) befestigt ist, dazu bestimmt, die Kompressionsbelastungen auf das Strukturteil, an das das besagte Eckstück befestigt ist, zu übertragen, wobei dieses Eckstück Führungsmittel (223) des Trägers (21) deutlich der Längsachse Z folgend umfasst,
**dadurch gekennzeichnet, dass** das Eckstück umfasst:
- ein Schneidelement (224) um den Kompressionsträger (21) der Längsachse Z folgend in mindestens zwei Lamellen zu zerschneiden,
- eine Freinut (225) für jede Lamelle.

2. Energieabsorbierendes Strukturelement (2) nach Anspruch 1, in dem ein Eckstück (22) an jedem Ende (213, 214) des Kompressionsträgers (21) befestigt ist.

3. Primärstruktur eines Luftfahrzeugrumpfes umfassend:
- eine Beschichtung (11)
- mindestens einen versteifenden Rahmen (13),
- mindestens einen auf diesem versteifenden Rahmen (13) befestigten Querträger (14)
- mindestens ein längliches energieabsorbierendes Strukturelement (2) nach einem der Ansprüche 1 bis 2,
wobei der Kompressionsträger an einem Ende (213) am Querträger (14) befestigt ist und an einem zweiten Ende (214) an dem versteifenden Rahmen (13), wobei der Kompressionsträger (21) an mindestens einem seiner Enden (213, 214) über ein Eckstück (22) befestigt ist.

4. Primärstruktur eines Luftfahrzeugrumpfes nach Anspruch 3, in der der Kompressionsträger (21) einen Kern (211) und zwei Decklagen umfasst (212), der auf mindestens einer bestimmten Länge seines eckstückseitigen (22) Endes, einen Querschnitt, in einer Normalebene zur Längsachse Z, in Form eines U aufweist, wobei dieser Träger an dem Eckstück (22) befestigt ist über Befestigungen für die Aufnahme maximaler Kräfte, mit denen das energieabsorbierende Strukturelement (2) außer im Fall eines Aufpralls belastet wird.

5. Primärstruktur eines Luftfahrzeugrumpfes nach Anspruch 4, in der das Eckstück (22) ein Schneidelement (224) umfasst, das eine Schneide (227) umfasst, die in Richtung des Kerns (211) des Kompressionsträgers (21) gerichtet ist, und zwei Freinuten (225), die auf beiden Seiten der Schneide (227) angeordnet sind.

6. Primärstruktur eines Luftfahrzeugrumpfes nach Anspruch 4, in der das Eckstück (22) ein Schneidelement (224) umfasst, das zwei Schneiden (227) umfasst, die in Richtung des Kerns (211) des Trägers (21) gerichtet sind, und drei Freinuten (225), zwei nebeneinander liegende Nuten, die durch eine Schneide (227) voneinander getrennt sind.

7. Primärstruktur eines Luftfahrzeugrumpfes nach einem der Ansprüche 3 bis 6, in der der Kompressionsträger (21) deutlich in Richtung der Längsachse Z orientierte Schichten umfasst, die im Wesentlichen die Längsfestigkeit des Kompressionsträgers und der gegenüber der Richtung der Längsachse Z geneigten Schichten kennzeichnet, die die Schnittfestigkeit des Kompressionsträgers (21) durch das Schneidelement (224) bei einem Aufprall hauptsächlich bestimmt..

8. Primärstruktur eines Luftfahrzeugrumpfes nach einem der Ansprüche 3 bis 7, in der der Kompressionsträger (21) in Höhe des ersten Endes (213) eine Ansatznut (217) gegenüber jeder Schneide (227) umfasst, wenn der Kompressionsträger (21) am Eckstück (22) befestigt ist.

9. Primärstruktur eines Luftfahrzeugrumpfes nach einem der Ansprüche 3 bis 8, in der das Eckstück (22), zumindest teilweise, aus Metall besteht.

10. Primärstruktur eines Luftfahrzeugrumpfes nach einem der Ansprüche 3 bis 9, in der das energieabsorbierende Strukturelement (2) eine Übertragung der Normalkräfte zwischen dem Querträger (14) und dem versteifenden Rahmen (13) gewährleistet, die den Belastungen während des Normalbetriebs des Luftfahrzeugs entsprechen.

11. Primärstruktur eines Luftfahrzeugrumpfes nach Anspruch 10, in der die Übertragung der Normalkräfte durch die Befestigung des Kompressionsträgers (21) am Eckstück (22) über arbeitende Befestigungen (215) gewährleistet wird.

12. Luftfahrzeug, das eine Primärstruktur eines Luftfahrzeugrumpfes nach einem der Ansprüche 3 bis 11 umfasst.
